# EUROPEAN PATENT SPECIFICATION

(11) **EP 4 363 272 B1**
(45) Date of publication and mention of the grant of the patent: **25.02.2026**
(21) Application number: 21730513.5
(22) Date of filing: 28.05.2021
(51) Int. Cl.: B60Q 1/40

(54) **STALK SWITCH ASSEMBLY WITH A CONTROLLABLE RELEASING MECHANISM**
LENKSTOCKSCHALTERANORDNUNG MIT STEUERBAREM AUSLÖSEMECHANISMUS
ENSEMBLE COMMUTATEUR À TIGE DOTÉ D'UN MÉCANISME DE LIBÉRATION CONTRÔLABLE

(43) Date of publication of application: 08.05.2024
(73) Proprietor: MERIT AUTOMOTIVE ELECTRONICS SYSTEMS S.L.U, 08620 - Barcelona (ES)
(72) Inventor: MODLINSKI, Boguslaw, 57-200 Zabkowice Slaskie (PL); SYREK, Wojciech, 34-113 Sosnowice (PL)
(74) Representative: Lukaszyk, Szymon
(86) International application number: PCT/EP2021/064341
(87) International publication number: WO 2022/248058

(56) References cited:
- EP-A2- 1 177 942
- JP-A- S5 242 091
- US-A- 4 097 700
- US-A- 5 068 633
- US-A1- 2002 056 629

## Description

The present invention relates to a stalk switch assembly with a controllable releasing mechanism, suitable for controlling turn-signal lights of an automotive vehicle, comprising a support, an activating rod disposed pivotably about a first axis within the support and mechanically coupled with an electric signal device, and a self-returning mechanism defining a neutral position and at least two locked positions of the activating rod.

### Background of the Invention

Stalk switch assemblies of this kind are frequently employed in steering wheel column integrated modules (CIM) in automotive industry. They usually form compact, preassembled units that at the vehicle assembly line are mechanically fixed to the steering wheel column and electrically connected to the vehicle wiring. It is known to implement the self-returning functionality by means of spring plungers acting on curved cams.

Publication WO2016098436 discloses a turn signal operation device. When the operation lever is pivoted from a neutral position, a sliding pin held by the operation lever slides on a guide cam. When the operation lever is pivoted to the operation position, the sliding pin is held by a holding member, temporarily fixing the operation lever in an operation position and illuminating the turn signal. If illumination of the turn signal is to be cancelled, depending on the travel state of the vehicle, etc., an electromagnetic actuator operates, releasing the temporary fixing of the sliding pin and returning the operation lever to the neutral position.

Publication US5068633 discloses an automatic cancelling device for a winker in which a locking removing member can efficiently transmit a stroke of a working member of a solenoid when returning a holder to neutral position. Construction of the locking removing member includes an engaging portion that engages with the working member of the solenoid, a first fulcrum portion on one side of the locking removing member which is brought into contact with the holder, and a second fulcrum portion on the other side of the locking removing member which is brought into contact with a supporting portion located on the lower case. Further, engaging protruding portions, disposed on one side of the holder, slide upon cam portions disposed on the locking removing member on either side of the engaging portions.

Publication US 2002/0056629 A1 discloses a winker lever canceling apparatus, wherein the position of an operated winker lever is held by a moderation pin and a moderation ridge portion. Further, a position detection means detects a position at which the winker lever is held. Moreover, a projection portion and a guide portion, which respectively interlock with an operating plate of a solenoid and a winker lever, are engaged with each other. Thus, as the magnetized operating plate moves, the winker lever is returned to a neutral position.

Publication US 4,097,700 discloses a switch mechanism for a turn signal having a transmitting means which is interposed between a stopper means for holding a moving contact piece to a position moved by an operating knob and means for releasing a holding force of the stopper means. The release means actuates the transmitting means which in tum operates on the stopper means to permit the turn signal to be reset to its initial inactive condition.

Publication EP1177942 discloses a switch reset device for vehicle comprising an electromechanical actuator under computer control, which raises the switch lever catch. Relevant turn signal operation devices are known also from publications DE3510345, DE102018115330, JPH08132957, JP S52 42091 A or WO2020035212

It has been the object of the present invention to provide a stalk switch assembly with a controllable releasing mechanism, which would be compact, cost efficient and simple to manufacture and assembly.

### Summary of the Invention

The invention provides a stalk switch assembly of the kind mentioned in the outset, wherein said controllable releasing mechanism comprises a guiding member coupled with the activating rod within the support; a yoke disposed slidably within said guiding member along a second axis corresponding to an axis of the activating rod passing through the first axis; two levers disposed in a plane substantially perpendicular to the first axis between said guiding member and said yoke, inclined to each other and having first ends distal to each other, which are slidably disposed within said guiding member, and second ends adjacent to each other, which are disposed within said yoke; a releasing member disposed slidably within the support along a third axis, corresponding to said second axis in the neutral position of the activating rod, and adjoining said yoke; a controllable actuator provided with a slidable stem connected with said releasing member; and two retaining surfaces defined by the support to provide abutment for said first ends of said levers in the locked positions of the activating rod, wherein, when the activating rod is in one of the locked positions and by activating the actuator, the slidable stem causes the releasing member to push the yoke and the lever, which is adjoining one of the retaining surfaces, to push against the surface so that the activating rod is rotated out from the locked position of the self-returning mechanism, which then brings the activating rod to the neutral position.

Pivoting the activating rod to the locked position of the self-returning mechanism stabilizes its position.

Preferably said first ends of said two levers are terminated with first protrusions, substantially parallel to the first axis, which are slidably disposed within recesses of said guiding member.

Preferably said second ends of said two levers are terminated with second protrusions substantially parallel to the first axis.

In such a case preferably said yoke is provided with a longitudinal groove substantially perpendicular to the first axis and to said second axis, wherein said second protrusions of said two levers are slidably disposed slidably within said longitudinal groove of said yoke.

In such a case preferably said second protrusions of said two levers are biased to each other within said groove of said yoke.

Preferably said controllable releasing mechanism further comprises a track fixed to the support to provide guidance for said first ends of said two levers.

The track, as well as the groove of the yoke, create an effective kinematic chain yielding a relatively long displacement of the first end of the unlocking lever with regard to a relatively short stroke of the actuator stem upon activation.

Preferably said guiding member is fixed to the activating rod within the support.

This allows to implement the invention in already produced switch assemblies with no need to substantially redesign the support and the activating rod.

Preferably said haptic self-returning mechanism comprises a plunger disposed slidably within the activating rod along said second axis and biased towards a haptic cam, wherein said haptic cam has a first recess defining the neutral position of the activating rod, two second recesses on opposite sides of said first recess defining locked positions of the activating rod, and two protrusions between said first recess and each of said second recesses.

### Brief description of drawings

The invention shall be described and explained below in connection with the attached drawings in which:
Fig. 1 is a schematic perspective top view of a steering wheel column integrated module comprising an embodiment of a stalk switch assembly according to the invention;
Fig. 2 is a schematic perspective side view of a kinematic chain of the releasing mechanism of the stalk switch assembly shown in Fig. 1;

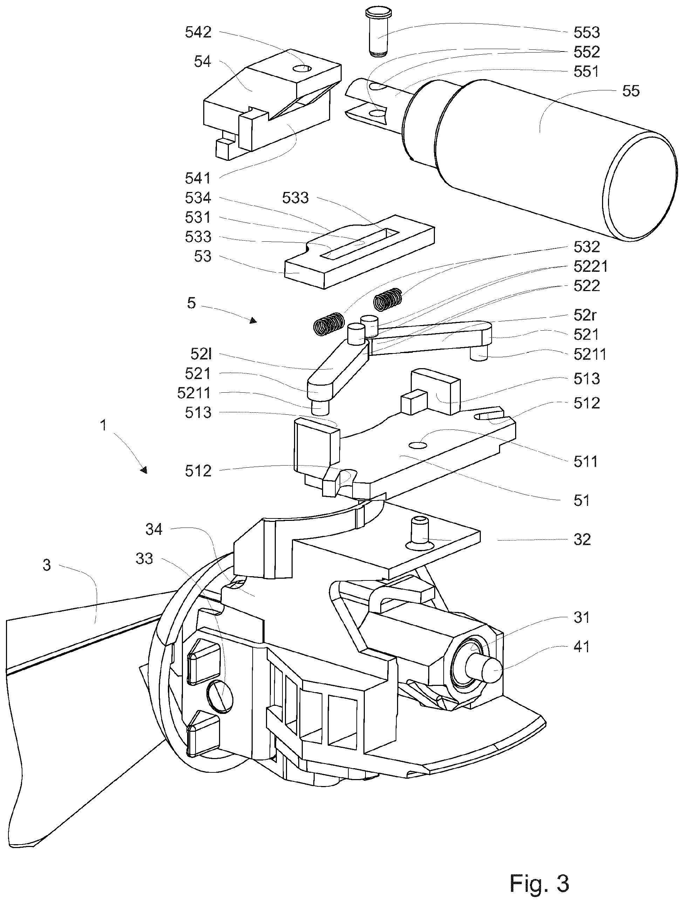

Fig. 3 is a schematic perspective, exploded view of the self-returning haptic assembly of the stalk switch assembly shown in Fig. 1
Fig. 4 is a schematic perspective and partially disassembled bottom view of the stalk switch assembly shown in Fig. 1;
Fig. 5 shows a self-returning haptic assembly of the stalk switch assembly shown in

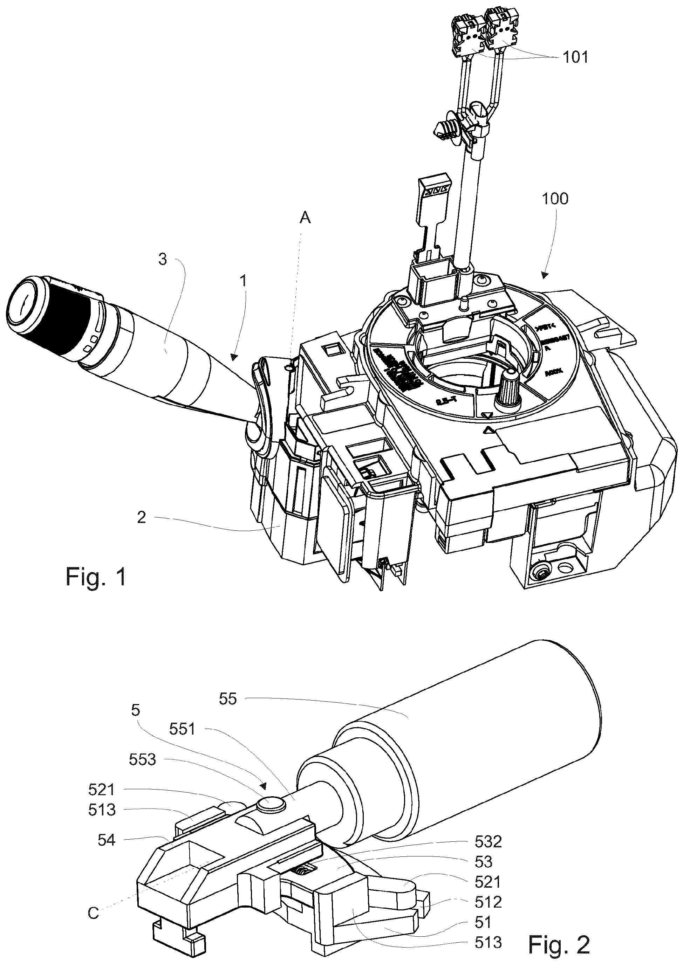

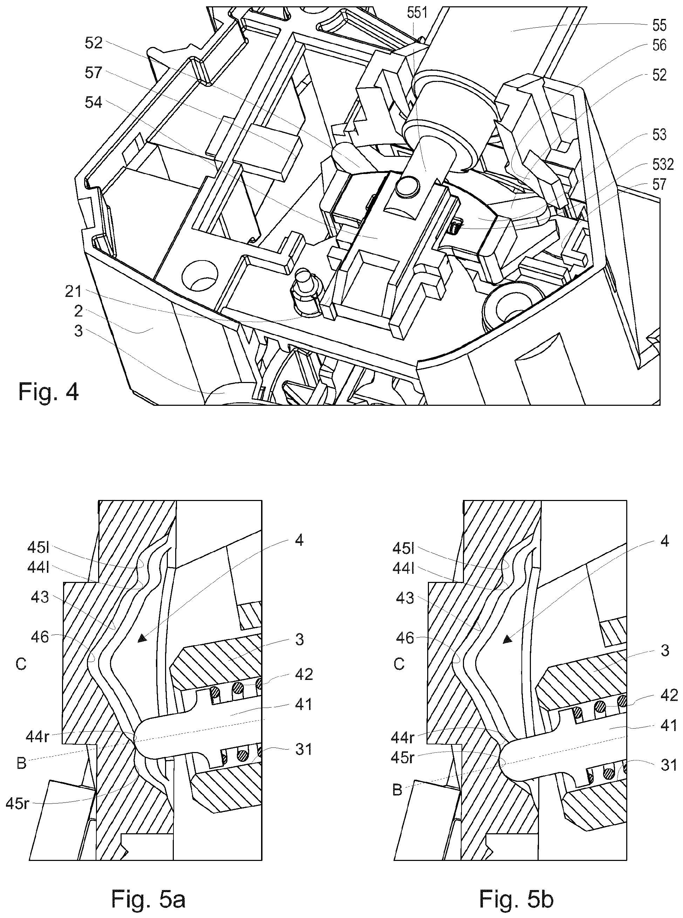

Fig. 1 in a cross-sectional view during (Fig. 5a) and after (Fig. 5b) attaining the locked, active position of the rod;

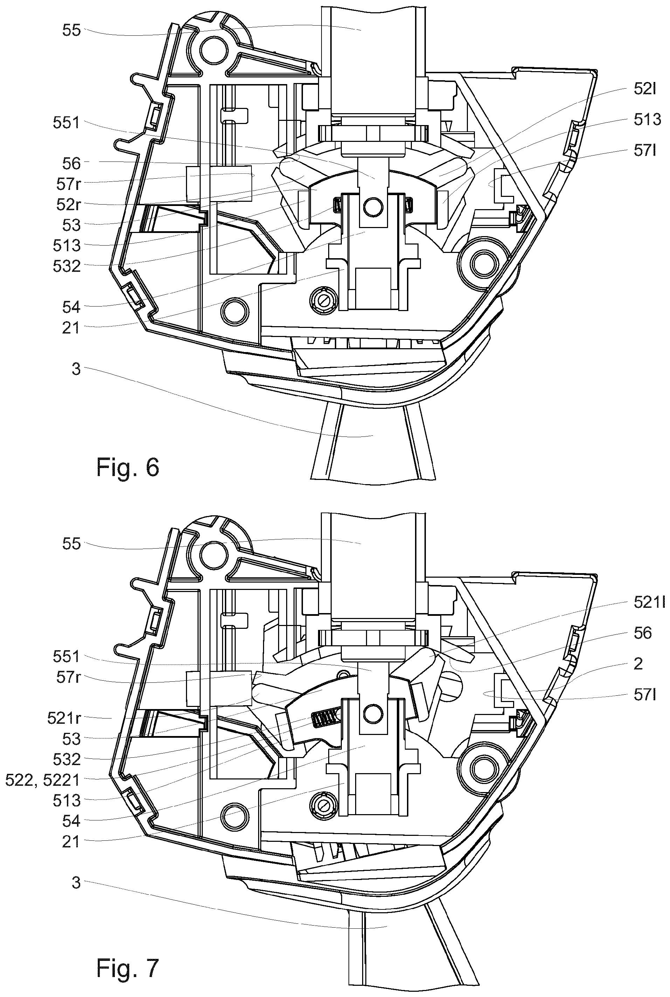

Fig. 6 is a schematic, partially disassembled bottom view of the stalk switch assembly shown in Fig. 1 in inactive, neutral position;
Fig. 7 shows the stalk switch assembly of Fig. 6 in locked, active position; and

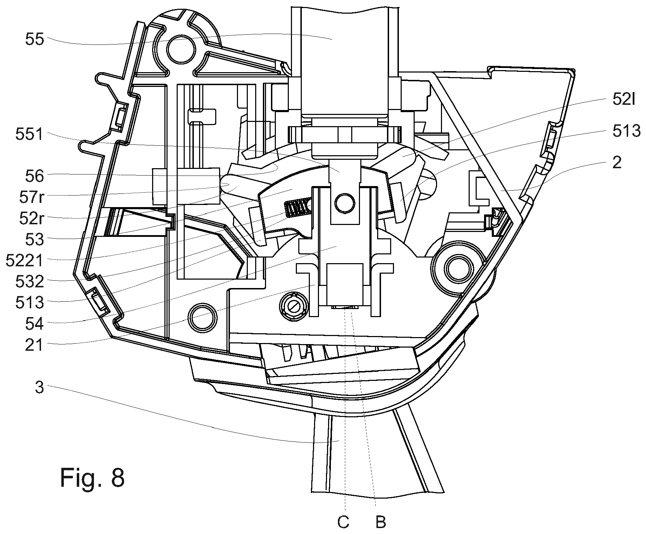

Fig. 8 shows the stalk switch assembly of Fig. 7 upon triggering a cancelling action.

### Detailed description of preferred embodiment

A compact, preassembled steering wheel column integrated module 100 of an automotive vehicle is shown in Fig. 1. The module 100 comprises an embodiment of a stalk switch assembly 1 according to the invention. The assembly 1 comprises a support 2, an activating rod 3 disposed pivotably about a first axis A within the support 2 and mechanically coupled with an electric switch (not shown) connected with a terminal 101. The module 100 can be fixed at the vehicle assembly line mechanically to the steering wheel column and the terminal 101 can be electrically connected to the vehicle wiring (not shown in the drawing) in a manner known to those skilled in the art.

Pivoting the rod 3 of the assembly 1 around the first axis A may be employed for controlling turn-signal lights of the automotive vehicle. The assembly 1 comprises a haptic self-returning mechanism 4 (cf. Fig. 5) defining a neutral and locked positions of the rod 3, and a controllable releasing mechanism 5 to unlock the rod 3 from the locked position so that it can return to the neutral position.

In the following, numerical references of elements performing the same functions remain the same in the drawings, wherein suffixes "l", "r" were added, where appropriate, to distinguish left or right inclination of the rod.

The haptic self-returning mechanism 4 comprises a plunger 41 disposed slidably within a cavity 31 at the end of the activating rod 3 and biased by a spring 42 to a haptic cam 43, so that when the activating rod 3 is pivoted the plunger 41 slides over the cam 43. The cam 43 has a first recess 46, in which the spring 42 pressure attains its minimum, which defines a global equilibrium position and the neutral position of the rod 3. The cam 43 further includes two second recesses 45 on the opposite sides of the first recess 46 and two protrusions 44 between the first recess 46 and each of the second recesses 45. The second recesses 45, in which the spring 42 pressure also attains its minimum define local equilibrium positions and the locked, active positions of the rod 3.

The releasing mechanism 5 comprises a guiding member 51, two levers 52, a yoke 53, a releasing member 54, a controllable actuator 55, a track 56, and two retaining surfaces 57. The actuator 55 is preferably of the electromagnetic type, but not limited to this type.

Partway inclination of the rod 3 activates left or right turn-signal lights, for as long the driver holds the rod 3 (to indicate a lane change, for example), so that after releasing the rod 3 the self-returning mechanism 4 restores the rod 3 neutral position. To signal a longer lasting turn the driver inclines the rod 3 all the way up or down until the plunger 41 locks in one of the second recesses 45. After the turn is completed the releasing mechanism 5, the operation of which shall be explained with reference to Figs. 6-8, unlocks the rod 3 and the self-returning mechanism 4 again restores the rod 3 neutral position shown in Fig. 6.

In this embodiment the rod 3 is coupled via latches 33 to a coupling member 34 behind the first axis A and the guiding member 51 is fixed to the coupling member 34 on a pin 32 passing through an opening 511 in the guiding member 51.

The levers are disposed in a plane substantially perpendicular to the first axis A. Each lever 52 has a first end 521 and a second end 522. First ends 521 of the levers 52 are distal to each other and terminated with first protrusions 5211, substantially parallel to the first axis A, which are slidably disposed within longitudinal recesses 512 of the guiding member 51, the axes of which correspond to the axes of the lever 52. The second ends 522 of the levers 52 are adjacent to each other and terminated with second protrusions 5221, also substantially parallel to the first axis A, and disposed slidably within a longitudinal groove 531 of the yoke 53. Both levers 52 are inclined to each other in a substantially V-shaped manner towards the actuator 55 and are capable of sliding and rotating between the guiding member 51 and the yoke 53, as shall be explained bellow. The yoke 53 is capable of sliding between two guiding walls 513 of the guiding member 51 along a second axis B corresponding to the axis of the rod 3 passing through the first axis A. The protrusions 5221 of the second ends 522 of the levers 52 are furthermore biased to each other by two springs 532 disposed within the groove 531 and abutting end walls 533 of the groove 531 thereby locating the second ends 522 of the levers 52 adjacent to each other.

The releasing member 54 is slidably disposed along a third axis C defining the neutral position of the rod 3 within a guide 21 in the support 2 and has a releasing surface 541 adjoining a releasing surface 534 of the yoke 53. The releasing member 54 is further connected with a stem 551 of the actuator 55 by means of a pin 553 passing through two openings 552 within the stem 551 and an opening 542 within the releasing member 54.

As shown in Fig. 7, after the rod 3 is pivoted clockwise by a driver to indicate a longer lasting vehicle turn right, the guiding member 51, the levers 52, and the yoke 53 rotate along with the rod 3. After a certain angle is reached the plunger 41 will engage in the second recess 45r maintaining a stable locked position shown in Fig. 5b. During rotation of the rod 3 the first end 521 of the lever 52l slides over and abuts the track 56. In the locked position of the rod 3 the first end 521 of the lever 52r adjoins the retaining surface 57r.

In order to trigger a controllable cancelling action of the releasing mechanism 5 the electromagnetic actuator 55 is energized retracting the slidable stem 551 inside, as shown in Fig. 8. The releasing member 54 connected with the stem 551 slides within the guide 21 along the third axis C and its releasing surface 541 pushes the releasing surface 534 of the yoke 53 along the second axis B. The yoke 53 acts on the levers 52 to slide their first protrusions 5211 within recesses 512 of the guiding member 51. During this action the first end 521 of the lever 52r acts on the retaining surface 57r slightly pivoting the rod 3 towards the neutral position. This displaces the plunger 41 from the second recess 45r (cf. Fig. 5b) behind the protrusion 44r (cf. Fig. 5a) and the rod 3 returns to its neutral position with the plunger 41 within the recess 46.

Thanks to that locking functionality of the stalk switch assembly 1 can be temporarily disabled by keeping the electromagnetic actuator 8 energized, so that engagement of the plunger 41 with the second recesses 45 is impossible.

In other embodiments of the present invention the second ends 522 of levers 52 could be disposed rotationally within holes of a yoke 53 and a controllable releasing mechanism 5 could be devoid of the track 56. Furthermore in other embodiments of the present invention a guiding member 51 and/or a yoke 53 could be provided with protrusions that would be slidably disposed within recesses of levers 52.

The above embodiments of the present invention are therefore merely exemplary. The figures are not necessarily to scale and some features may be exaggerated or minimized. These and other factors however should not be considered as limiting the scope of protection which is defined in appended claims.

### List of reference numerals

- A.: first axis (of rotation of the activating rod)
- B.: second axis (of the activating rod, passing through the axis A)
- C: third axis (of the activating rod neutral position)
- 1.: stalk switch assembly
- 2.: support
21. guide
- 3.: activating rod
31. cavity
32. pin
33. latch
34. coupling member
- 4.: haptic self-returning mechanism
41. plunger
42. spring
43. haptic cam
44. protrusion
45. second recess (local equilibrium position)
46. first recess (global equilibrium position)
- 5.: releasing mechanism
51. guiding member
511. opening
512. longitudinal recess
513. guiding wall
52. lever
521. first end
5211. first protrusion
522. second end
5221. second protrusion
53. yoke
531. longitudinal groove
532. spring
533. end wall
534. releasing surface
54. releasing member
541. releasing surface
542. opening
55. actuator
551. stem
552. opening
553. pin
56. track
57. retaining surface
- 100.: steering wheel column integrated module
- 101.: terminal

## Claims

1. A stalk switch assembly (1) with a controllable releasing mechanism (5), suitable for controlling turn-signal lights of an automotive vehicle, comprising a support (2), an activating rod (3) disposed pivotably about a first axis (A) within the support (2) and mechanically coupled with an electric signal device, and a haptic self-returning mechanism (4) defining a neutral position (46) and at least two locked positions (45) of the activating rod (3), wherein said controllable releasing mechanism (5) comprises
a releasing member (54) disposed slidably within the support (2), and a controllable actuator (55) provided with a slidable stem (551) connected with the releasing member (54), **characterized in that**
said controllable releasing mechanism (5) further comprises a guiding member (51) coupled with the activating rod (3) within the support (2); a yoke (53) disposed slidably within said guiding member (51) along a second axis (B) corresponding to the axis of the activating rod (3) passing through the first axis (A);
two levers (52) disposed in a plane substantially perpendicular to the first axis (A) between said guiding member (51) and said yoke (53), inclined to each other and having
first ends (521) distal to each other, which are slidably disposed within said guiding member (51), and
second ends (522) adjacent to each other, which are disposed within said yoke (53);
and
two retaining surfaces (57) defined by the support (2) to provide abutment for said first ends of said levers (52) in the locked positions of the activating rod (3), wherein said releasing member (54) is disposed slidably within the support (2) along a third axis (C), corresponding to said second axis (B) in the neutral position of the activating rod (3), and adjoining said yoke (53), and
wherein, when the activating rod (3) is in one of the locked positions (45) and by activating the actuator (55), the slidable stem (551) causes the releasing member to push the yoke (53) and the lever (52), which is adjoining one of the retaining surfaces (57), to push against the surface (57) so that the activating rod (3) is rotated out from the locked position of the self-returning mechanism (4), which then brings the activating rod (3) to the neutral position (46).

2. The switch assembly according to Claim 1, **characterized in that** said first ends (521) of said two levers (52) are terminated with first protrusions (5211), substantially parallel to the first axis (A), which are slidably disposed within recesses (512) of said guiding member (51).

3. The switch assembly according to Claim 1 or 2, **characterized in that** said second ends (522) of said two levers (52) are terminated with second protrusions (5221) substantially parallel to the first axis (A).

4. The switch assembly according to Claim 3, **characterized in that** said yoke (53) is provided with a longitudinal groove (531) substantially perpendicular to the first axis (A) and to said second axis (B), wherein said second protrusions (522) of said two levers (52) are slidably disposed slidably within said longitudinal groove (531) of said yoke (53).

5. The switch assembly according to Claim 4, **characterized in that** said second protrusions (522) of said two levers (52) are biased to each other within said groove (531) of said yoke (53).

6. The switch assembly according to any one of preceding Claims, **characterized in that** said controllable releasing mechanism (5) further comprises a track (56) fixed to the support (2) to provide guidance for said first ends (521) of said two levers (52).

7. The switch assembly according to any one of preceding Claims, **characterized in that** said guiding member (51) is fixed to the activating rod (3) within the support (2).

8. The switch assembly according to any one of preceding Claims, **characterized in that**, said haptic self-returning mechanism (4) comprises a plunger (41) disposed slidably within the activating rod (3) along said second axis (B) and biased towards a haptic cam (43), wherein said haptic cam (43) has
a first recess (46) defining the neutral position of the activating rod (3),
two second recesses (45) on opposite sides of said first recess (46) defining locked positions of the activating rod (3), and
two protrusions (44) between said first recess (46) and each of said second recesses (45).

## Patentansprüche

1. Eine Stielschalterbaugruppe (1) mit einem steuerbaren Auslösemechanismus (5), geeignet zur Steuerung von Blinkleuchten eines Kraftfahrzeugs, umfassend eine Halterung (2), eine Betätigungsstange (3), die schwenkbar um eine erste Achse (A) innerhalb der Halterung (2) angeordnet und mechanisch mit einer elektrischen Signalvorrichtung gekoppelt ist, und einen haptischen Selbstrückstellmechanismus (4), der eine Neutralstellung (46) und mindestens zwei Verriegelungsstellungen (45) der Betätigungsstange (3) definiert, wobei der steuerbare Auslösemechanismus (5) umfasst
ein Freigabeelement (54), das verschiebbar innerhalb der Halterung (2) angeordnet ist, und einen steuerbaren Aktuator (55) mit einem verschiebbaren Schaft (551), der mit dem Freigabeelement (54) verbunden ist, **dadurch gekennzeichnet, dass** der steuerbare Auslösemechanismus (5) umfasst ferner
ein Führungselement (51), das mit der Betätigungsstange (3) innerhalb der Halterung (2) verbunden ist;
ein Joch (53), das entlang einer zweiten Achse (B), die der Achse der Betätigungsstange (3) entspricht, die durch die erste Achse (A) verläuft, verschiebbar innerhalb des Führungselements (51) angeordnet ist;
zwei Hebel (52), die in einer Ebene angeordnet sind, die im Wesentlichen senkrecht zur ersten Achse (A) zwischen dem Führungselement (51) und dem Joch (53) verläuft, zueinander geneigt sind und
erste Enden (521), die distal zueinander angeordnet sind und verschiebbar innerhalb des Führungselements (51) angeordnet sind, und
zweite Enden (522), die nebeneinander angeordnet sind und innerhalb des Jochs (53) angeordnet sind;
und
zwei haltende Flächen (57), die durch die Halterung (2) definiert sind, um den ersten Enden der Hebel (52) in den verriegelten Positionen der Betätigungsstange (3) einen Anschlag zu bieten,
wobei das Freigabeelement (54) in der Halterung (2) entlang einer dritten Achse (C) verschiebbar angeordnet ist, die der zweiten Achse (B) in der Neutralstellung der Betätigungsstange (3) entspricht und an das Joch (53) angrenzt, und
wobei, wenn sich die Betätigungsstange (3) in einer der Verriegelungsstellungen (45) befindet und durch Betätigen des steuerbaren Aktuators (55), der verschiebbare Schaft (551) bewirkt, dass das Freigabeelement das Joch (53) und den Hebel (52), der an eine der haltenden Flächen (57) angrenzt, gegen die Fläche (57) drückt, so dass die Betätigungsstange (3) aus der verriegelten Position des Selbstrückstellmechanismus (4) herausgedreht wird, der dann die Betätigungsstange (3) in die Neutralstellung (46) bringt.

2. Die Schalterbaugruppe gemäß Anspruch 1, **dadurch gekennzeichnet, dass** die ersten Enden (521) der beiden Hebel (52) mit ersten Vorsprüngen (5211) abgeschlossen sind, die im Wesentlichen parallel zur ersten Achse (A) verlaufen und gleitbar in Aussparungen (512) des Führungselements (51) angeordnet sind.

3. Die Schalterbaugruppe gemäß Anspruch 1 oder 2, **dadurch gekennzeichnet, dass** die zweiten Enden (522) der beiden Hebel (52) mit zweiten Vorsprüngen (5221) abgeschlossen sind, die im Wesentlichen parallel zur ersten Achse (A) verlaufen.

4. Die Schalterbaugruppe gemäß Anspruch 3, **dadurch gekennzeichnet, dass** das Joch (53) mit einer längs verlaufenden Nut (531) versehen ist, die im Wesentlichen senkrecht zur ersten Achse (A) und zur zweiten Achse (B) verläuft, wobei die zweiten Vorsprünge (5221) der beiden Hebel (52) verschiebbar in der längs verlaufenden Nut (531) des Jochs (53) angeordnet sind.

5. Die Schalterbaugruppe gemäß Anspruch 4, **dadurch gekennzeichnet, dass** die zweiten Vorsprünge (5221) der beiden Hebel (52) innerhalb der Nut (531) des Jochs (53) gegeneinander vorgespannt sind.

6. Die Schalterbaugruppe gemäß einem der vorstehenden Ansprüche, **dadurch gekennzeichnet, dass** der steuerbare Auslösemechanismus (5) ferner eine an der Halterung (2) befestigte Führungsschiene (56) umfasst, um die ersten Enden (521) der beiden Hebel (52) zu führen.

7. Die Schalterbaugruppe gemäß einem der vorstehenden Ansprüche, **dadurch gekennzeichnet, dass** das Führungselement (51) an der Betätigungsstange (3) innerhalb der Halterung (2) befestigt ist.

8. Die Schalterbaugruppe gemäß einem der vorstehenden Ansprüche, **dadurch gekennzeichnet, dass** der haptische Selbstrückstellmechanismus (4) einen Kolben (41) umfasst, der entlang der zweiten Achse (B) verschiebbar innerhalb der Betätigungsstange (3) angeordnet ist und in Richtung einer haptischen Nocke (43) vorgespannt ist, wobei die haptische Nocke (43) aufweist
eine erste Aussparung (46), die die Neutralstellung der Betätigungsstange (3) definiert,
zwei zweite Aussparungen (45) auf gegenüberliegenden Seiten der ersten Aussparung (46), die die Verriegelungspositionen der Betätigungsstange (3) definieren, und
zwei Vorsprünge (44) zwischen der ersten Aussparung (46) und jeder der zweiten Aussparungen (45) aufweist.

## Revendications

1. Un ensemble de commutateur à manette (1) doté d'un mécanisme de déverrouillage commandable (5), apte à commander les clignotants d'un véhicule automobile, comprenant un support (2), une tige d'activation (3) montée pivotante autour d'un premier axe (A) à l'intérieur du support (2) et mécaniquement couplée à un dispositif de signal électrique, ainsi qu'un mécanisme haptique de rappel automatique (4) définissant une position neutre (46) et au moins deux positions verrouillées (45) de la tige d'activation (3), ledit mécanisme de déverrouillage commandable (5) comprenant un organe de déverrouillage (54) monté coulissant à l'intérieur du support (2), et un actionneur commandable (55) muni d'une tige coulissante (551) reliée à l'organe de déverrouillage (54), **caractérisé en ce que**
ledit mécanisme de déverrouillage commandable (5) comprend en outre
un organe de guidage (51) couplé à la tige d'activation (3) à l'intérieur du support (2); un étrier (53) monté coulissant dans ledit organe de guidage (51) le long d'un second axe (B) correspondant à l'axe de la tige d'activation (3) passant par le premier axe (A); deux leviers (52) disposés dans un plan sensiblement perpendiculaire au premier axe (A) entre ledit organe de guidage (51) et ledit étrier (53), inclinés l'un par rapport à l'autre et présentant
des premières extrémités (521) mutuellement éloignées, qui sont montées coulissantes dans ledit organe de guidage (51), et
des secondes extrémités (522) adjacentes l'une à l'autre, qui sont disposées dans ledit étrier (53);
et
deux surfaces de retenue (57) définies par le support (2) pour fournir un appui auxdites premières extrémités desdits leviers (52) dans les positions verrouillées de la tige d'activation (3),
l'organe de déverrouillage (54) étant monté coulissant à l'intérieur du support (2) le long d'un troisième axe (C), correspondant audit second axe (B) en position neutre de la tige d'activation (3), et venant au contact dudit étrier (53), et
**en ce que**, lorsque la tige d'activation (3) se trouve dans l'une des positions verrouillées (45) et par actionnement de l'actionneur (55), la tige coulissante (551) amène l'organe de déverrouillage à pousser l'étrier (53) et le levier (52) qui est au contact de l'une des surfaces de retenue (57), à pousser contre ladite surface (57) de sorte que la tige d'activation (3) est entraînée en rotation hors de la position verrouillée du mécanisme de rappel automatique (4), qui ramène alors la tige d'activation (3) en position neutre (46).

2. L'ensemble de commutateur selon la revendication 1, **caractérisé en ce que** les premières extrémités (521) des deux leviers (52) sont terminées par des premières saillies (5211), sensiblement parallèles au premier axe (A), qui sont montées coulissantes dans des évidements (512) dudit organe de guidage (51).

3. L'ensemble de commutateur selon les revendications 1 ou 2, **caractérisé en ce que** les secondes extrémités (522) des deux leviers (52) sont terminées par des secondes saillies (5221) sensiblement parallèles au premier axe (A).

4. L'ensemble de commutateur selon la revendication 3, **caractérisé en ce que** ledit étrier (53) est pourvu d'une gorge longitudinale (531) sensiblement perpendiculaire au premier axe (A) et audit second axe (B), les secondes saillies (5221) des deux leviers (52) étant montées coulissantes dans ladite gorge longitudinale (531) dudit étrier (53).

5. L'ensemble de commutateur selon la revendication 4, **caractérisé en ce que** les secondes saillies (5221) des deux leviers (52) sont précontraintes l'une vers l'autre au sein de ladite gorge (531) dudit étrier (53).

6. L'ensemble de commutateur selon l'une quelconque des revendications précédentes, **caractérisé en ce que** ledit mécanisme de déverrouillage commandable (5) comprend en outre une came de guidage (56) fixée au support (2) afin d'assurer le guidage desdites premières extrémités (521) des deux leviers (52).

7. L'ensemble de commutateur selon l'une quelconque des revendications précédentes, **caractérisé en ce que** ledit organe de guidage (51) est fixé à la tige d'activation (3) à l'intérieur du support (2).

8. L'ensemble de commutateur selon l'une quelconque des revendications précédentes, **caractérisé en ce que** le mécanisme haptique de rappel automatique (4) comprend un poussoir (41) monté coulissant dans la tige d'activation (3) le long dudit second axe (B) et précontraint vers une came haptique (43), ladite came haptique (43) présentant
une première évidure (46) définissant la position neutre de la tige d'activation (3), deux secondes évidures (45) de part et d'autre de ladite première évidure (46) définissant des positions verrouillées de la tige d'activation (3), et
deux protubérances (44) entre ladite première évidure (46) et chacune desdites secondes évidures (45).
